# EUROPEAN PATENT APPLICATION

(11) **EP 3 141 732 A1**
(43) Date of publication of application: **15.03.2017**
(21) Application number: 16187115.7
(22) Date of filing: 02.09.2016
(51) Int. Cl.: F02K 3/115, F02C 6/08, F02C 7/18

(54) **TURBOFAN ENGINE MOUNTED PRECOOLER SYSTEM**

(30) Priority: 10.09.2015 US 201514850300
(71) Applicant: Honeywell International Inc., Morris Plains, NJ 07950 (US)
(72) Inventor: ALSTAD, Shawn, Morris Plains, NJ 07950 (US); ROMANO, Robert, Morris Plains, NJ 07950 (US); ANDERSON, Morris, Morris Plains, NJ 07950 (US); HOOVER, Robert, Morris Plains, NJ 07950 (US)
(74) Representative: Houghton, Mark Phillip

(57) **Abstract**

A precooler system having a symmetrical precooler core that is optimized to be integrally mounted to the turbofan engine, regardless of the turbofan engine size, is provided. The provided precooler system optimizes available space between a turbofan engine and the nacelle, and does not substantially increase weight and cost. The provided precooler system may be flexibly implemented as either a right handed precooler system or a left handed precooler system.

## Description

### TECHNICAL FIELD

The present invention relates to a precooler system for use with a turbofan engine, and more particularly to a turbofan engine mounted precooler system.

### BACKGROUND

Turbofan engines are often configured to divert a portion of high-energy compressed air (generally from a compressor section of the turbofan engine) for use in other aircraft systems. The diverted compressed engine air may be supplied to aircraft systems, such as an aircraft environmental control system (ECS), an aircraft anti-ice system, and the like. To minimize the chance of fires due to hot surface ignition within the fuselage of the aircraft, the high temperature compressor bleed air is cooled by lower temperature fan bleed air. The diverted air is typically cooled by a precooler or heat exchanger (referred to herein as a precooler) prior to its introduction to the fuselage in aircraft with fuselage mounted engines. However, determining where to locate the precooler with respect to the turbofan engine in these installations is not straightforward.

Locating a precooler proximate a turbofan engine is desirable but traditionally untenable. Turbofan engines are generally surrounded by a nacelle that provides a smooth outer cover, and creates a bounded space within which the turbofan engine operates. In traditional turbofan engine designs, the space between the turbofan engine and the nacelle is limited and generally consumed by other turbofan engine systems. Consequently, in all but the largest of turbofan engines, space and weight considerations often drive the disposition of the precooler to locations remote from the turbofan engine, such as within the pylon. Additional ducting and components may then then be required for routing the engine air to and from the precooler. However, the additional ducting and components may add weight and cost to the aircraft, a generally undesirable result as the demand for more economical aircraft continues to increase. Additionally, disposing of the precooler in the pylon requires the precooler system to have separate right hand and left hand permutations, and prohibits that pylon space to be used for other aircraft systems and devices. The separate left hand and right hand precooler system increases part count, and part cost.

Hence, there is a need for a non-handed precooler system having a symmetric precooler core that is optimized to be integrally mounted to the turbofan engine, regardless of the turbofan engine size. The desired precooler system optimizes available space between a turbofan engine and the nacelle, and does not substantially increase weight and cost. The present invention provides these features.

### BRIEF SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

A precooler system is provided. The precooler system comprising:
a nacelle;
a turbofan engine housed within the nacelle, the turbofan engine configured to discharge engine air and bypass air; the turbofan engine comprising a bypass duct providing a path for the bypass air;
a high pressure shut off valve (HPSOV) coupled to the turbofan engine;
a pressure regulating shut off valve (PRSOV) coupled to the turbofan engine and to the HPSOV; wherein the HPSOV and PRSOV are each (i) located within the same turbofan engine stage, and (ii) configured to cooperatively regulate pressure of engine air; and a symmetrical precooler core disposed outside of the bypass duct, integrally mounted in an opening in the nacelle, and forming a substantially continuous outer wall of the bypass duct, the symmetrical precooler core comprising (i) a first flow passage having an engine air inlet and an engine air outlet, the first flow passage being in flow communication with engine air at the engine air inlet and discharge air at the engine air outlet, and (ii) a second flow passage having bypass flow path inlet and a bypass flow path outlet and being in flow communication with bypass air at the bypass flow path inlet and ambient air at the bypass flow path outlet.

Another precooler system is provided. The precooler system comprising:
a turbofan engine configured to discharge engine air and bypass air, the turbofan engine having a bypass duct associated therewith; and
a symmetrical precooler core configured to be integrally mounted in an opening in a nacelle, and disposed outside of the bypass duct, the symmetrical precooler core comprising
   (i) a first flow passage having an engine air inlet and an engine air outlet, the first flow passage being in flow communication with the engine air at the engine air inlet and with discharge air at the engine air outlet, and
   (ii) a second flow passage having bypass flow path inlet and a bypass flow path outlet and being in flow communication with bypass air at the bypass flow path inlet and ambient air at the bypass flow path outlet,
the symmetrical precooler core further configured to transfer heat between the first flow passage and the second flow passage.

Also provided is a symmetrical precooler core, the symmetrical precooler core comprising:
a first flow passage having an engine air inlet and an engine air outlet, the first flow passage configured to be in flow communication with engine air at the engine air inlet and with discharge air at the engine air outlet; and
a second flow passage having bypass flow path inlet and a bypass flow path outlet and configured to be in flow communication with bypass air at the bypass flow path inlet and with ambient air at the bypass flow path outlet; and
wherein the symmetrical precooler core is configured to (i) be disposed outside of a turbofan engine bypass duct, (ii) be integrally mounted in an opening in a nacelle, (iii) form a substantially continuous outer wall of the bypass duct.

Other desirable features will become apparent from the following detailed description and the appended claims, taken in conjunction with the accompanying drawings and this background.

### BRIEF DESCRIPTION OF THE DRAWINGS

A more complete understanding of the subject matter may be derived by referring to the following Detailed Description and Claims when considered in conjunction with the following figures, wherein like reference numerals refer to similar elements throughout the figures, and wherein:
FIG. 1 is a simplified illustration of a traditional turbofan engine having a precooler located within the pylon;
FIG. 2 is a simplified cross-sectional side view of a turbofan engine showing a precooler system, in accordance with an exemplary embodiment;
FIG. 3 is a partial cross sectional view, above a turbofan engine centerline, showing a key features of a precooler system, in accordance with an exemplary embodiment;
FIG. 4 is a three dimensional image of key features of a precooler system in accordance with an exemplary embodiment;
FIG. 5 is an illustration of the precooler of FIG. 4 showing of the air path getting through the precooler cross tubes, in accordance with an exemplary embodiment;
FIG. 6 is a three dimensional image of a support structure in accordance with an exemplary embodiment;
FIG. 7 is a partial cross sectional view of a precooler system showing a support structure and arrangement of cross tubes, in accordance with the exemplary embodiment;
FIG. 8 and FIG. 9 are three dimensional images showing a precooler core with a blocking assembly on a bypass duct side of the precooler core, in accordance with an exemplary embodiment; and
FIG. 10 and FIG. 11 are three dimensional images showing the precooler core utilized in a right handed and in a left handed application, respectively, in accordance with an exemplary embodiment.

### DETAILED DESCRIPTION

The following detailed description is merely exemplary in nature and is not intended to limit the invention or the application and uses of the invention. As used herein, embodiment described herein as "exemplary" is not necessarily to be construed as preferred or advantageous over other embodiments.

Although not the focus of the present invention, one with skill in the art will readily appreciate that the traditional turbofan engine comprises multiple sections, in stages. For easy reference in the below detailed description, a simplified description of a traditional turbofan engine with a cooling system is provided as follows.

A traditional turbofan engine is generally enclosed within a nacelle and comprises a fan section, a compressor section, a combustion section, a turbine section, and an exhaust section. The compressor section raises the pressure and increases the temperature of the air directed into it from the fan section. The compressor section may direct the compressed air into the combustion section. In the combustion section, the high pressure air is mixed with fuel and combusted. The combusted air is then directed into the turbine section, wherein it expands through turbines, causing them to rotate, and is then exhausted through a mixer nozzle and combines with air from a bypass duct. At least some compressed air is generally reserved for the aircraft. This is known as customer bleed air. It is generally high pressure and high temperature air that comes from the engine and is sent via ducting to the airframe.

The installation of a traditional turbofan engine in a modern aircraft requires the high pressure compressor discharge air to be cooled prior to its introduction to other sections of the aircraft. In this regard, a cooling system typically includes a precooler. Prior to being sent to the precooler, the high pressure compressor discharge air is generally pressure regulated via several valves and associated ducting. Two of these valves include the high pressure shut off valve (HPSOV) and the pressure regulating shut off valve (PRSOV). The HPSOV selects the compressor stage from which the high pressure air source is retrieved. The PRSOV is generally used to control or modulate the quantity of engine air pressure flow in the ducting being supplied to other aircraft systems.

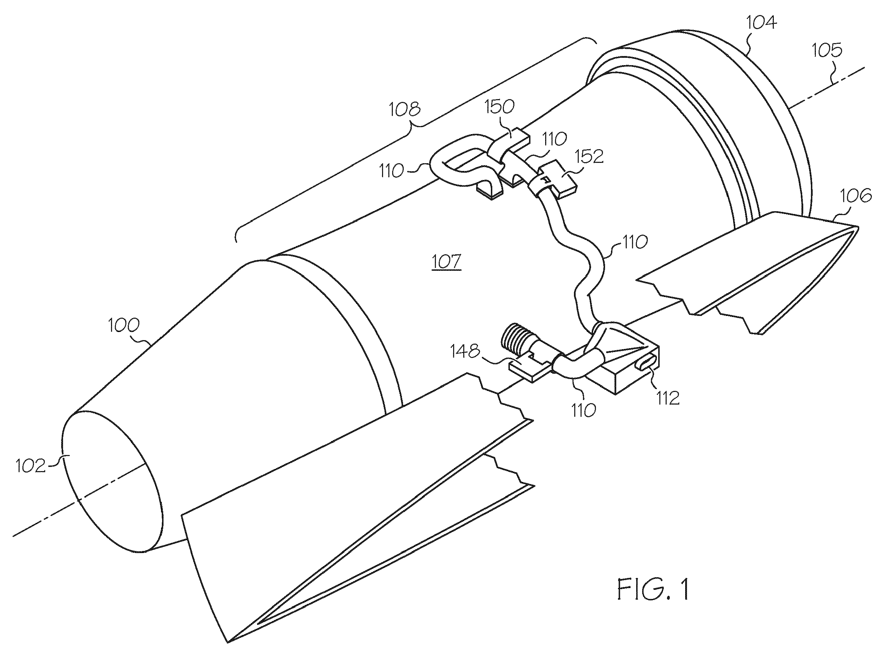

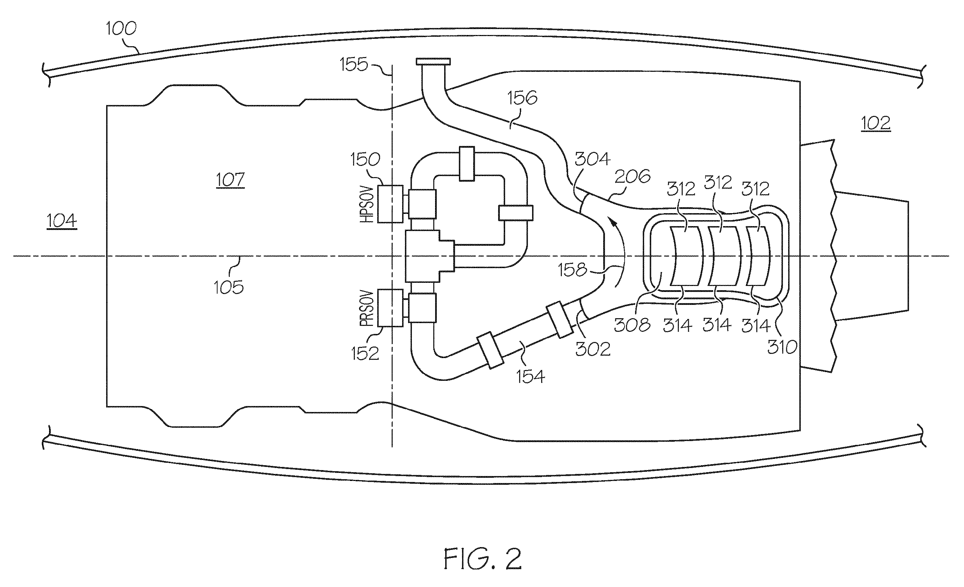

Together, the HPSOV and PRSOV are configured to cooperatively regulate the pressure of the high pressure, high temperature compressor discharge air subsequently received by the precooler. Accordingly, in some applications, the orientation and location of the HPSOV and PRSOV, with respect to the precooler, are design specific features of a precooler system. FIG. 1 is a simplified illustration of a traditional precooler system for a turbofan engine and FIGs. 2-11 present a novel precooler core for a turbofan engine mounted precooler system.

The precooler receives low pressure, low temperature fan discharge air from the engine. This air is used to cool the high pressure, high temperature compressor discharge air to be delivered to other aircraft subsystems located in the fuselage of the aircraft. After passing through the precooler, the low pressure air is discharged overboard. However, the fan discharge airflow is regulated by a fan air valve (FAV). The fan air valve is a modulating flow control system used to minimize the amount of fan air discharged overboard. Figure 1 shows the location of the fan air valve in a traditional precooler system.

FIG. 1 is a simplified, cross-sectional view of a nacelle **100** having an airflow inlet at the forward side **104** and an exhaust nozzle at the aft side **102.** Turbofan engine centerline **105** is shown. Nacelle **100** has a portion **108** removed to reveal an enclosed turbofan engine **107.** Ducting **110** couples the turbofan engine to a precooler **112.** As previously mentioned, the precooler **112** typically does not fit within available space between the nacelle **100** and the turbofan engine **107,** and is therefore generally placed within a pylon **106,** outside of the nacelle **100.** The fan air valve **148** is generally placed within the pylon, outside of the nacelle.

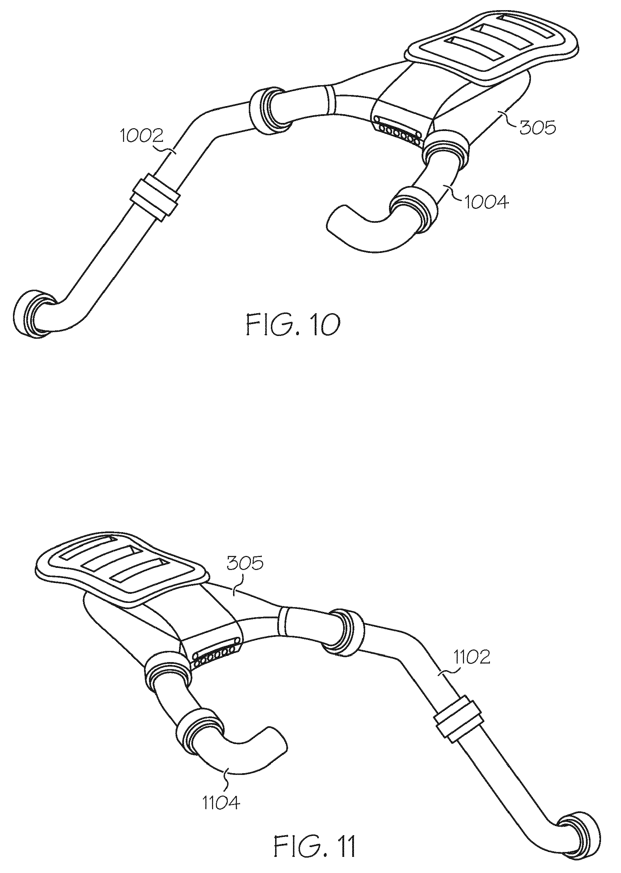

FIG. 2 is a simplified plan view of a turbofan engine showing a precooler system, in accordance with an exemplary embodiment. The provided precooler system **206** optimizes space between the turbofan engine **107** and the nacelle **100.** "Stage" **155** represents a volumetric space wherein the turbofan engine **107** has the smallest diameter. Accordingly, at stage **155,** the volumetric space between the turbofan engine **107** and the nacelle **100** is the largest. In this embodiment, HPSOV **150** and PRSOV **152** are located substantially within turbofan engine stage **155,** thereby optimizing available space. Ducting **154** provides engine air to precooler system **206,** and ducting **156** channels discharge air released from precooler system **206** to a target aircraft system (not shown). The implementation of precooler system **206** depicted in FIG. 2 may be referred to as a left handed implementation. The novel precooler core proposed herein is non-handed, in that it may be implemented in either direction (for comparison, refer to FIGs. 10-11).

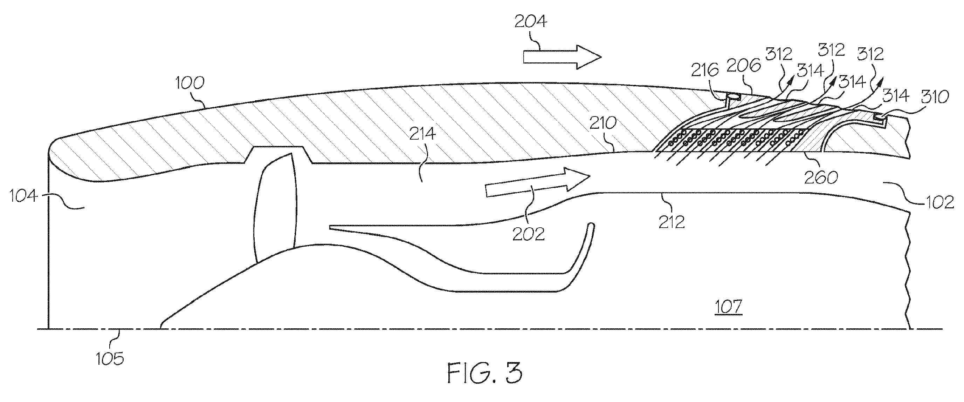

The precooler system **206** provides a first flow passage **158** being in flow communication with pressure regulated engine air at an engine air inlet **302** and discharge air at an engine air outlet **304.** The precooler system **206** also provides one or more second flow passages **312** having a bypass flow path inlet (FIG. 3, **260)** and one or more bypass flow path outlets **314.** The second flow passage **312** being in flow communication with bypass air (FIG. 3 **202)** at the bypass flow path inlet and ambient air at the bypass flow path outlet.

Once through the HPSOV, PRSOV, and associated ducting, the high temperature, compressed, engine air is sufficiently pressure regulated for the precooler at engine air inlet **302.** In an embodiment, an engine air supply duct **154** supplies compressed, high temperature engine air to the precooler system **206.** Although shown as a pipe, the engine air supply duct **154** and duct **156** may alternatively be any structure suitable for delivering air to the precooler system **206.**

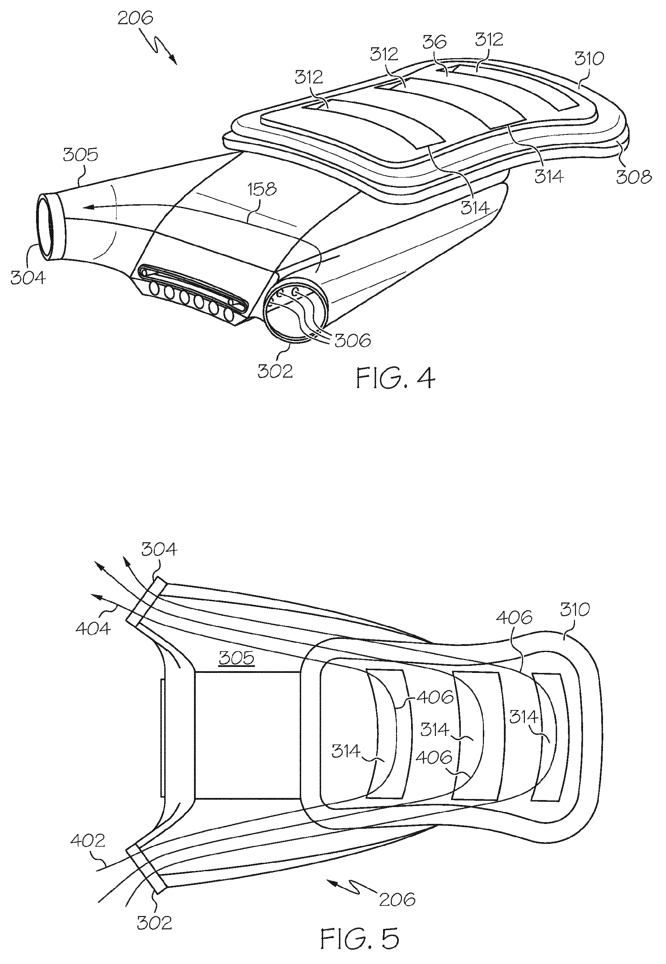

The precooler core (FIG. 4 **305)** of the precooler system **206** is configured to transfer heat between a first fluid flowing through the first flow passage **158** and a second fluid flowing through the second flow passage **312.** Cool or cold bypass air (FIG. 3 **202)** from the bypass duct (FIG. 3 **214)** enters the precooler core (FIG. 4 **305)** at the bypass flow path inlet (FIG. 3 **260)** and hot engine air enters the precooler core (FIG. 4 **305)** at the engine air inlet **302.** The cold and hot air are separately maintained in their respective flow paths by features within the precooler system **206.** In an embodiment, the precooler system **206** employs features such as cross tubes and deflector slats to promote exchange of heat from the hot turbofan engine air with the relatively cold bypass air (FIG. 3 **202)** (cross tubes and deflector slats are described in connection with FIGs. 5-7). After heat exchange in the precooler system **206,** the cooled turbofan engine air is released as discharge air at the engine air outlet **304** and may then be delivered to a target aircraft system, such as an air conditioning system, ECS (Environmental Control System) package, or an aircraft cabin.

FIG. 3 is a partial cross sectional view, above a turbofan engine centerline **105,** of a turbofan engine **107** within nacelle **100,** showing key features of a precooler system **206** in accordance with the exemplary embodiment. Bypass air **202** is shown flowing within bypass duct **214.** Bypass duct **214** is bounded on one side by an inner surface **210** of nacelle **100** (defining an outer wall of the bypass duct **214)** and on another side by an outer surface **212** of the turbofan engine **107,** and extends axially through the nacelle **100.** The inner surface **210** of the nacelle **100** is typically machined or manufactured to be smooth, free of blisters, pits, seams, or edges, machined to be a substantially continuous circumferential surface to minimize air obstruction within.

In the embodiment, precooler system **206** is disposed outside of the bypass duct **214** and mounted in an opening **216** in the nacelle **100.** Ambient air **204** moves from the forward side **104** toward the aft side **102.** Air in the bypass duct **302** is at a higher pressure that the ambient air **204.** This makes it possible for cooling flow to pass through the precooler releasing heated air from the second flow passage **312** into ambient air **204.**

By disposing the precooler system **206** outside of the bypass duct **214,** and integrally mounting the precooler system **206** into an opening **216** in the nacelle **100,** in some embodiments, air may flow directly between the bypass duct **214** and the precooler system **206,** without requiring any additional ducting. Additionally, the provided precooler system **206** design may coordinate with a HPSOV **150** and PRSOV **152** that are each located within the space between the turbofan engine **107** and the nacelle **100** (stage **155),** further optimizing turbofan engine **107** space and weight.

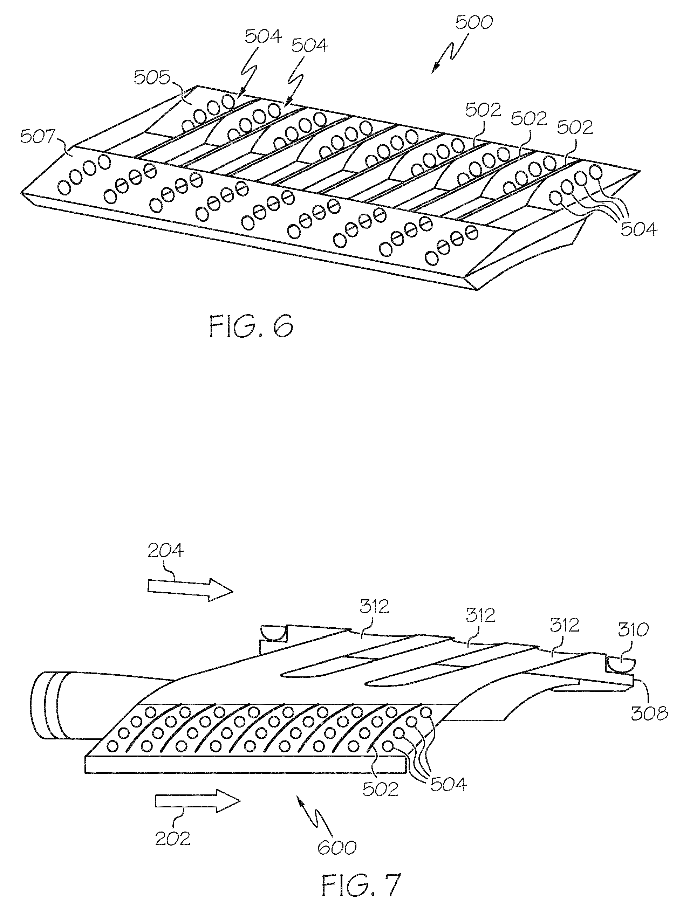

FIG. 4 is three dimensional image showing key features of a precooler system **206,** in accordance with the exemplary embodiment. The precooler system **206** comprises a precooler core **305,** having a first flow passage **158** between an engine air inlet **302** and an engine air outlet **304,** the first flow passage **158** configured to be in flow communication with engine air at the engine air inlet **302** and discharge air at the engine air outlet **304.** The precooler core **305** has one or more second flow passages **312** having bypass flow path inlet (not shown) and a bypass flow path outlet **314,** and configured to be in flow communication with bypass air **202** at the bypass flow path inlet and ambient air at the bypass flow path outlet **314.** Bypass flow path outlets **314** allow bypass air (FIG. 3 **202)** to pass through the precooler core **305.** The precooler system **206** is configured to transfer heat between the air flowing in the first flow passage **158** and the air flowing in the second flow passage **312** (openings **306** are described in connection with FIG. 6). The first flow passage is described in connection with FIG. 5.

When mounted to the nacelle **100,** the integrally mounted precooler system **206** provides a smooth outer surface **316** that is substantially continuous with the outer surface of nacelle **100.** In an embodiment, precooler system **206** may comprise a plate **308,** surrounded by a seal **310,** the combination of which is configured to be integrally mounted into an appropriately sized opening **216** in nacelle **100,** and forming a portion of the outer surface of the nacelle **100.** In other embodiments, the precooler core **305** has a surface sufficient to be integrally mounted into an appropriately sized opening **216** in the nacelle **100** and provide a smooth outer surface **316** that is substantially continuous with the outer surface of nacelle **100.**

FIG. 5 is an illustration of the precooler of FIG. 4 showing cross tubes **406** within the precooler core **305** of the precooler system **206.** FIG. 5 is not to scale, but provides an intuitive visual depicting the cross tubes **406** extending through the first flow passage **158** and receiving hot engine air at the engine air inlet **302,** channeling air through the precooler core, and releasing cooler discharge air at the engine air outlet **304.** Concurrent with channeling hot engine air through the precooler core **305,** cooler bypass air **202** is passing through one or more second flow passages **312,** across one or more cross tubes **406** (by which it is being heated) in the second flow passages **312,** and getting released into ambient air **204** outside of the nacelle **100.** Bypass flow path outlets **314** provide a second flow passage **312** for the cooler bypass air **202** to cross the cross tubes **406** and cool the cross tubes **406** in doing so.

The arrangement of cross tubes **406,** their dimensions, and their composition are selected to maximize heat exchanging surface area as the movement of air in the second flow passages **312** travels across them, cooling the cross tubes **406** as it does so. In the exemplary embodiment, the cross tubes **406** are stabilized within the precooler core **305** via a support structure. An exemplary support structure is described in connection with FIG. 6.

As may be readily appreciated, surface area is the key to effective heat transfer, and each additional cross tube **406** provides increased surface area for heat transfer. However, as surface area is increased, size, weight, and cost typically increase, forcing individual design applications to optimize the benefits of increased surface area with the tradeoffs. In an embodiment, the cross tubes **406** have a diameter from about 1/8 of an inch to about ¼ of an inch, and there are about ten cross tubes **406.**

FIG. 6 is a three dimensional image of a support structure **500,** in accordance with an exemplary embodiment. Support structure **500** is configured to fit within the precooler core 305 and is coupled therein. The support structure **500** may be used to define positions and locations of features implemented to assist in heat exchange.

For example, support structure **500** may be used to define an arrangement of cross tubes such that each cross tube **406** in the arrangement of cross tubes extends from the engine air inlet **302** to the engine air outlet **304.** In the embodiment, support structure **500** comprises a first wall **505** and a second wall **507,** each wall having a plurality of holes therethrough. The plurality of holes is arranged such that, when populated by cross tubes **406,** the arrangement forms one or more air deflection paths to assist in heat exchange in the second flow passage **312.** In the embodiment, the plurality of holes is arranged in groups **504** of holes, each of the groups **504** forming a slight arc in the same direction. In the embodiment each group **504** of holes includes four holes; however, the number of holes in the plurality of holes and the number of holes in each group **504** is design specific.

The support structure **500** may further comprise one or more deflector slats **502** coupled within the support structure **500** and oriented to deflect bypass air **202** and to assist in heat exchange through the second flow passage **312.** Accordingly, in some embodiments, the support structure **500** may rely on an arrangement of the cross tubes **406** to deflect air, and in other embodiments, the support structure **500** may additionally rely on deflector slats **502** for deflecting air. Although the support structure **500** is shown as comprising a first wall **505** and a second wall **507,** each wall having a plurality of holes therethrough, a variety of other configurations may be implemented to accomplish the same objective without straying from the scope of the invention.

FIG. 7 is a partial cross sectional view of a precooler system **206** showing the support structure **500** of FIG. 6 coupled within, in accordance with the exemplary embodiment. FIG. 7 provides additional detail of the second flow passages **312,** the bypass air **202** and the ambient air **204.**

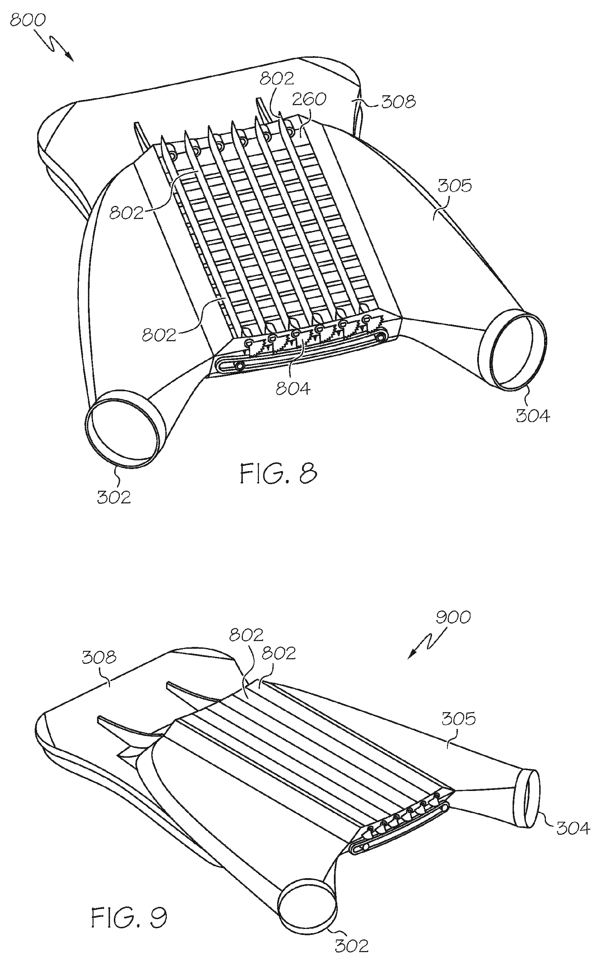

FIG. 8 and FIG. 9 are three dimensional images showing a precooler with a blocking assembly on the bypass flow path inlet, in accordance with an exemplary embodiment. The blocking assembly is coupled to the bypass flow path inlet **260** and configured to (i) permit bypass air **202** to flow through the second flow passage **312** when the blocking assembly is in a first position, and (ii) prevent bypass air **202** from flowing through the second flow passage **312,** thereby forming a substantially continuous outer wall of the bypass duct **214** when the blocking assembly is a second position. The louvers may be self-sealing and act as the fan air valve FAV, thus simplifying the system level design.

As one with skill in the art will appreciate, the blocking functionality may be implemented in a variety of ways. In the embodiment, louvers **802** are each attached to the precooler core **305** with moveable fasteners **804.** The size, material and dimension of the louvers **802** and moveable fasteners **804** are application specific. In FIG. 8, the louvers **802** are shown in a first position (open), permitting bypass air **202** to flow through the second flow passage **312,** and in FIG. 9, louvers **802** are shown in a second position (closed), wherein the may self-seal and prevent bypass air **202** from flowing through the second flow passage **312,** and form a substantially continuous outer wall of the bypass duct **214.**

FIG. 10 and FIG. 11 are three dimensional images showing the precooler core **305** utilized in a right handed and in a left handed precooler system **206** applications, respectively, in accordance with an exemplary embodiment. Advantageously, the precooler system **206** is "non-handed," in that it works in right handed and in left handed applications. In other words, although the location of the HPSOV **150,** PRSOV **152,** and flow of engine air was depicted and described as occurring in first direction in first flow passage **158** in connection with FIGs. 2, 4, and 5, the direction of flow of engine air can be reversed through the precooler core **305** without redesign of the precooler core **305.** In practice, implementing a left handed precooler core (FIG. 10) and right handed precooler core (FIG. 11) only differs in the routing of the ducting **(1002** and **1004,** or **1102** and **1104,** respectively) and placement of the respective valves. Advantageously, both implementations of the precooler system **206** work in coordination with the placement of the HPSOV **150** and PRSOV **152** at turbofan engine stage **155.**

Thus, there has been provided a precooler system having a precooler core that is optimized to be integrally mounted to the turbofan engine, regardless of the turbofan engine size. The provided precooler system optimizes available space between a turbofan engine and the nacelle, and does not substantially increase weight and cost. The provided precooler system may be flexibly implemented as either a right handed precooler system or a left handed precooler system.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

Some of the embodiments and implementations are described above in terms of functional and/or logical block components or modules. However, it should be appreciated that such block components (or modules) may be realized by any number of hardware, software, and/or firmware components configured to perform the specified functions. To clearly illustrate this interchangeability of hardware and software, these illustrative components, blocks, modules, circuits, and steps have been described above generally in terms of their functionality. Skilled artisans may implement the described functionality in varying ways for each particular application, but such implementation decisions should not be interpreted as causing a departure from the scope of the present invention.

## Claims

1. A precooler system, the precooler system comprising:
a turbofan engine configured to discharge engine air and bypass air, the turbofan engine having a bypass duct associated therewith; and
a symmetrical precooler core configured to be integrally mounted in an opening in a nacelle, and disposed outside of the bypass duct, the symmetrical precooler core comprising
(i) a first flow passage having an engine air inlet and an engine air outlet, the first flow passage being in flow communication with the engine air at the engine air inlet and with discharge air at the engine air outlet, and
(ii) a second flow passage having bypass flow path inlet and a bypass flow path outlet and being in flow communication with bypass air at the bypass flow path inlet and ambient air at the bypass flow path outlet,
the symmetrical precooler core further configured to transfer heat between the first flow passage and the second flow passage.

2. The precooler system of Claim 1, further comprising a blocking assembly coupled to the bypass flow path inlet and configured to (i) prevent bypass air from flowing through the second flow passage, thereby self-sealing and forming a substantially continuous outer wall of the bypass duct when the blocking assembly is a first position, and (ii) permit bypass air to flow through the second flow passage when the blocking assembly is in a second position.

3. The precooler system of Claim 2, wherein the blocking assembly comprises a plurality of substantially parallel louver doors extending across the second flow passage.

4. The precooler system of Claim 3, further comprising :
a first cross tube extending through the first flow passage, the first cross tube receiving engine air at the engine air inlet and releasing discharge air at the engine air outlet.
wherein the first cross tube is one of a first group of cross tubes, and the first group of cross tubes is arranged within the second flow passage to form an air deflection path between the bypass flow path inlet and the bypass flow path outlet.

5. The precooler system of Claim 4, further comprising:
a support structure configured to fit within the precooler core and coupled therein, the support structure defining an arrangement of cross tubes such that each cross tube in the arrangement of cross tubes extends from the engine air inlet to the engine air outlet; and
wherein the first group of cross tubes is coupled to the support structure.

6. The precooler system of Claim 5, wherein the arrangement of cross tubes comprises a plurality of groups of cross tubes, the first group of cross tubes being one of the plurality of groups of cross tubes, and each group of cross tubes in the plurality of groups of cross tubes is arranged within the second flow passage to form a respective air deflection path between the bypass flow path inlet and the bypass flow path outlet.

7. The precooler system of Claim 6, further comprising a deflector slat coupled within the support structure and oriented to direct bypass air through the second flow passage.

8. The precooler system of Claim 6, further comprising a plurality of deflector slats each of which being coupled within the support structure and oriented to direct bypass air through the second flow passage.

9. The precooler system of Claim 2, wherein the turbofan engine further comprises a high pressure shut off valve (HPSOV) and a pressure regulating shut off valve (PRSOV), the HPSOV and PRSOV each being coupled to the turbofan engine and each being located at substantially a same turbofan engine stage, and wherein the HPSOV and PRSOV are configured to cooperatively regulate pressure of the engine air.

10. A symmetrical precooler core, the symmetrical precooler core comprising:
a first flow passage having an engine air inlet and an engine air outlet, the first flow passage configured to be in flow communication with engine air at the engine air inlet and with discharge air at the engine air outlet; and
a second flow passage having bypass flow path inlet and a bypass flow path outlet and configured to be in flow communication with bypass air at the bypass flow path inlet and with ambient air at the bypass flow path outlet; and
wherein the symmetrical precooler core is configured to (i) be disposed outside of a turbofan engine bypass duct, (ii) be integrally mounted in an opening in a nacelle, (iii) form a substantially continuous outer wall of the bypass duct.

11. The precooler core of Claim 10, further comprising a first group of cross tubes, and the first group of cross tubes is arranged within the second flow passage to form an air deflection path in the second flow passage.

12. The precooler core of Claim 11, wherein the arrangement of cross tubes comprises a plurality of groups of cross tubes, the first group of cross tubes is one of the plurality of groups of cross tubes, and each group of cross tubes in the plurality of groups of cross tubes is arranged within the second flow passage to form a respective air deflection path between the bypass flow path inlet and the bypass flow path outlet.

13. The precooler core of Claim 12, further comprising a deflector slat coupled within the support structure and oriented to deflect bypass air through the second flow passage.

14. The precooler core of Claim 12, further comprising a plurality of deflector slats each of which being coupled within the support structure and oriented to deflect bypass air through the second flow passage.

15. The precooler core of Claim 10, further comprising a blocking assembly coupled to the bypass flow path inlet and configured to (i) self-seal and prevent bypass air from flowing through the second flow passage, thereby forming a substantially continuous outer wall of the bypass duct when the blocking assembly is a first position, and (ii) permit bypass air to flow through the second flow passage when the blocking assembly is in a second position.
